# EUROPÄISCHE PATENTANMELDUNG

(11) **EP 1 845 063 A2**
(43) Veröffentlichungstag der Anmeldung: **17.10.2007**
(21) Anmeldenummer: 07006309.4
(22) Anmeldetag: 27.03.2007
(51) Int. Cl.: C01B 3/36, C01B 3/38, C01B 3/48

(54) **Verfahren und Vorrichtung zur Erzeugung von Wasserstoff aus organischen Sauerstoffverbindungen**

(30) Priorität: 13.04.2006 DE 102006017888
(71) Anmelder: Linde Aktiengesellschaft, 65189 Wiesbaden (DE)
(72) Erfinder: Behrens, Axel, Dr., 81377 München (DE); Bender, Peter, 81371 München (DE); Schödel, Nicole, Dr., 81477 München (DE); Winkler, Hubertus, Dr., 82491 Grainau (DE)

(57) **Zusammenfassung**

Die Erfindung betrifft ein Verfahren zur Erzeugung zumindest eines Wasserstoff enthaltenden Produktstromes (4) aus Einsatzstoffen (1), welche organische Sauerstoffverbindungen mit mehr als einem Kohlenstoffatom enthalten, sowie eine Vorrichtung zur Durchführung des Verfahrens. Aus einem Einsatzstoff (1) wird in einem ersten Verfahrensschritt in einem ersten Reaktor (P) ein Zwischenprodukt gewonnen, welches anschließend durch Dampfreformierung in einem von außen beheizten Dampfreformierungsreaktor (Dampfreformer) (D) in ein Wasserstoff und Kohlenmonoxid enthaltendes Synthesegas (3) umgesetzt wird.

## Beschreibung

Die Erfindung betrifft ein Verfahren zur Erzeugung zumindest eines Wasserstoff enthaltenden Produktstromes aus Einsatzstoffen, welche organische Sauerstoffverbindungen mit mehr als einem Kohlenstoffatom enthalten, sowie eine Vorrichtung zur Durchführung des Verfahrens.

Im Bestreben, den Kohlendioxideintrag in die Erdatmosphäre zu senken oder zumindest nicht weiter anwachsen zu lassen, und als Alternativen zu den schwindenden Erdöl- und Erdgasreserven, werden in Zukunft verstärkt Energieträger aus nachwachsenden Rohstoffen erzeugt werden. Gemäß einer EU-Richtlinie sollen in der Europäischen Union bis zum Jahr 2010 mindestens 5,75% des Kraftstoffbedarfs durch derartige Energieträger gedeckt werden. Eine herausragende Rolle spielt hierbei Biodiesel, der bereits heute in einer Konzentration von bis zu fünf Prozent dem an deutschen Tankstellen verfügbaren Dieselkraftstoff zugesetzt ist.

Biodiesel ist ein genormter Krafftstoff, der vor allem aus Rapsöl, aber auch aus anderen pflanzlichen Ölen und -fetten gewonnen wird. Pflanzenöle und -fette bestehen aus Triglyceriden, d. h. Fettsäuren, die jeweils zu dritt an Glycerin gebunden sind. Dieser Aufbau hat zur Folge, dass Pflanzenöle und -fette bei normalen Umgebungstemperaturen zähflüssig bis fest sind, also eine viel höhere Viskosität besitzen als die Kraftstoffe, für die ein marktüblicher Dieselmotor ausgelegt ist. Pflanzenöle und -fette verhalten sich beim Einspritzvorgang anders, und auch die Verbrennung läuft weniger sauber ab. Diese Nachteile lassen sich auch durch motorische Eingriffe - wie Vorwärmung des Pflanzenöls - nur unvollkommen kompensieren.

Biodiesel entsteht aus Pflanzenölen und -fetten durch den Ersatz des Glycerins durch Methanol. Seine Viskosität entspricht der von handelsüblichem Dieselkraftstoff, weshalb er problemlos auch in nicht modifizierten Dieselmotoren verbrannt werden kann.

Bei der Biodieselproduktion fallen erhebliche Glycerinmengen in Form von Rohglycerin an. Das Rohglycerin weist einen Glyceringehalt von 80 - 85% auf, enthält daneben aber auch noch in größeren Mengen Wasser und Salze sowie Reststoffe aus dem Produktionsprozess. Nach dem Stand der Technik wird das Rohglycerin durch Vakuumdestillation, Desodorierung und Filtration soweit aufgereinigt, dass es den strengen Anforderungen des Europäischen Arzneimittelbuches (European Pharmacopeion) genügt, und mit einer Reinheit von mindestens 99,5% als Pharmaglycerin an die Pharmazeutische Industrie verkauft werden kann. Gegenwärtig kann die gesamte bei der Biodieselherstellung anfallende Glycerinmenge auf diese Weise verwertet werden. Mit der absehbaren Ausweitung der Biodieselproduktion wird dies in Zukunft jedoch immer schwieriger, so dass nach anderen Verwertungswegen gesucht werden muss.

Aufgabe der vorliegenden Erfindung ist es daher, ein Verfahren der gattungsgemäßen Art anzugeben, dass es ermöglicht, das bei der Biodieselproduktion anfallende Glycerin einer wirtschaftlichen Nutzung zuzuführen.

Diese Aufgabe wird verfahrensseitig erfindungsgemäß dadurch gelöst, dass aus einem Einsatzstoff in einem ersten Verfahrensschritt in einem ersten Reaktor ein Zwischenprodukt gewonnen wird, welches anschließend durch Dampfreformierung in einem von außen beheizten Dampfreformierungsreaktor (Dampfreformer) in ein Wasserstoff und Kohlenmonoxid enthaltendes Synthesegas umgesetzt wird.

Weitere Ausgestaltungen des erfindungsgemäßen Verfahrens sehen vor, dass
- im ersten Verfahrensschritt dem ersten Reaktor Wasserdampf zugeführt wird, so dass die Einsatzstoffe in Anwesenheit von Wasserdampf umgesetzt werden.
- der erste Verfahrensschritt zur Umsetzung der Einsatzstoffe in der Konvektionszone des Dampfreformers durchgeführt wird.
- es sich bei dem ersten Verfahrensschritt um eine Pyrolyse handelt, die in einem Pyrolysereaktor durchgeführt wird.
- es sich bei dem ersten Verfahrensschritt um eine Partielle Oxidation (POX) handelt, die in einem POX-Reaktor durchgeführt wird, wozu dem POX- Reaktor ein geeignetes Oxidationsmittel zugeführt wird, bei dem es sich bevorzugt um Luft oder mit Sauerstoff angereicherte Luft oder Sauerstoff handelt.
- dem Zwischenprodukt aus dem ersten Verfahrensschritt vor dem Eintritt in den Dampfreformer Wasserdampf zugemischt wird.
- die Dampfreformierung unter Zuführung eines geeigneten Oxidationsmittels durchgeführt wird, wobei es sich bei dem Oxidationsmittel bevorzugt um Luft oder mit Sauerstoff angereicherte Luft oder Sauerstoff handelt.
- die Dampfreformierung in Anwesenheit eines Katalysators durchgeführt wird.
- die bei der katalytisch unterstützten Dampfreformierung eingesetzten Katalysatoren aus Nickel (Ni) oder Platin (Pt) oder Palladium (Pd) oder Eisen (Fe) oder Rhodium (Rh) oder Ruthenium (Ru) oder Iridium (Ir) bestehen oder Ni und/oder Pt und/oder Pd und/oder Fe und/oder Rh und/oder Ru und/oder Ir enthalten.
- bei der katalytisch unterstützten Dampfreformierung Katalysatoren eingesetzt werden, die auch zur katalytisch unterstützten Dampfreformierung von Naphtha oder von Methan geeignet sind.
- aus dem Synthesegas durch Wassergas-Shift-Reaktion ein Produktgas mit definiertem Wasserstoff/Kohlenmonoxid-Verhältnis erzeugt wird, wobei die Wassergas-Shift-Reaktion nach einer Ausgestaltung des erfindungsgemäßen Verfahrens innerhalb des Dampfreformers und nach einer anderen Ausgestaltung des erfindungsgemäßen Verfahrens in einem, dem Dampfreformer nachgeschalteten Wassergas-Shift-Reaktor (Shift-Reaktor) durchgeführt wird. Unter Wassergas-Shift-Reaktion sei dabei eine Gleichgewichtsreaktion zu verstehen, in der Kohlenmonoxid mit Wasser zu Kohlendioxid und Wasserstoff umgesetzt wird.
- die Einsatzstoffe Alkohole mit mehr als einer Alkoholgruppe, insbesondere Glycerin, enthalten.
- die Einsatzstoffe aus biogenen Rohstoffen gewonnen werden. Die Erfindung betrifft ferner eine Vorrichtung zur Erzeugung zumindest eines Wasserstoff enthaltenden Produktstromes aus Einsatzstoffen, welche organische Sauerstoffverbindungen mit mehr als einem Kohlenstoffatom enthalten.

Vorrichtungsseitig wird die gestellte Aufgabe dadurch gelöst, dass ein erster Reaktor, in dem aus einem Einsatzstoff ein Zwischenprodukt erzeugbar ist, und ein von außen beheizter Dampfreformierungsreaktor (Dampfreformer), in welchem das im ersten Reaktor erzeugte Zwischenprodukt in ein Wasserstoff und Kohlenmonoxid enthaltendes Synthesegas umsetzbar ist, hintereinander angeordnet sind.

Weitere Ausgestaltungen der erfindungsgemäßen Vorrichtung sehen vor, dass
- der erste Reaktor in der Konvektionszone des Dampfreformers angeordnet ist.
- der erste Reaktor ein Reaktor zur Durchführung einer Pyrolyse (Pyrolysereaktor) oder ein Reaktor zur Durchführung einer Partiellen Oxidation (POX-Reaktor) ist.
- der Dampfreformer Dampfreformierungsreaktor zur Durchführung einer katalytisch unterstützten Dampfreformierung ist.
- ein Reaktor zur Durchführung einer Wassergas-Shift-Reaktion (Shift-Reaktor), in welchem aus dem Wasserstoff und Kohlenmonoxid enthaltenden Synthesegas ein Produktgas mit definiertem Wasserstoff/Kohlenmonoxid-Verhältnis erzeugbar ist, hinter dem Dampfreformer oder - in einer Variante der erfindungsgemäßen Vorrichtung - innerhalb des Dampfreformers angeordnet ist.

Die Erfindung ist geeignet, aus einer Vielzahl von Einsatzstoffen Wasserstoff und/oder Synthesegas zu erzeugen. Die Pyrolyse der Einsatzstoffe erlaubt den Einsatz eines einfach aufgebauten und kostengünstig zu betreibenden Dampfreformers, mit einer als Festbett ausgeführten Katalysatorschüttung. Aufgrund der nichtkatalytischen Vorstufe können Probleme mit Kohlenstoffablagerungen am Dampfreformierungskatalysator umgangen werden.

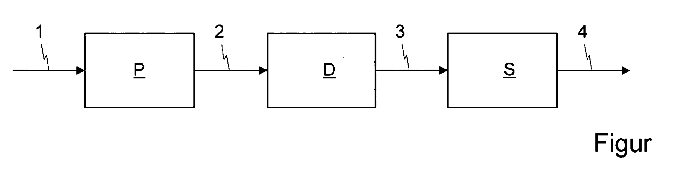

Im Folgenden soll die Erfindung anhand eines in der Figur schematisch dargestellten Ausführungsbeispiels näher erläutert werden:
Das vorliegende Ausführungsbeispiel betrifft eine Anlage zur Erzeugung eines vorwiegend Wasserstoff enthaltenden Produktgases, wobei Rohglycerin aus der Biodieselherstellung aus Einsatzstoff dient, dass zu ca. 85% aus Glycerin besteht, daneben aber auch noch in größeren Mengen Wasser und Salze sowie Reststoffe aus dem Produktionsprozess enthält.

Über Leitung 1 wird das Rohglycerin in den Pyrolysereaktor P eingeleitet und dort zu einem Pyrolyseprodukt umgesetzt. Das Pyrolyseprodukt wird über Leitung 2 aus dem Pyrolysereaktor P abgezogen und in den Dampfreformer D weiter geleitet, wo es mit katalytischer Unterstützung in ein überwiegend Wasserstoff und Kohlenmonoxid enthaltendes Synthesegas umgesetzt wird. Über Leitung 3 wird das überwiegend Wasserstoff und Kohlenmonoxid enthaltendes Synthesegas aus dem Dampfreformer D abgezogen und dem Shift-Reaktor S zugeführt. Aus dem Shift-Raktor S, in welchem der überwiegende Teil des Kohlenmonoxids mit Wasser zu Kohlendioxid und Wasserstoff umgesetzt wird, wird ein vorwiegend Wasserstoff enthaltendes Produktgases über Leitung 4 abgezogen und einer Aufbereitung (nicht dargestellt) zugeleitet.

## Patentansprüche

1. Verfahren zur Erzeugung zumindest eines Wasserstoff enthaltenden Produktstromes aus Einsatzstoffen, welche organische Sauerstoffverbindungen mit mehr als einem Kohlenstoffatom enthalten, **dadurch gekennzeichnet, dass** aus einem Einsatzstoff in einem ersten Verfahrensschritt in einem ersten Reaktor ein Zwischenprodukt gewonnen wird, welches anschließend durch Dampfreformierung in einem von außen beheizten Dampfreformierungsreaktor (Dampfreformer) in ein Wasserstoff und Kohlenmonoxid enthaltendes Synthesegas umgesetzt wird.

2. Verfahren nach Anspruch 1, **dadurch gekennzeichnet, dass** im ersten Verfahrensschritt dem ersten Reaktor Wasserdampf zugeführt wird, so dass die Einsatzstoffe in Anwesenheit von Wasserdampf umgesetzt werden.

3. Verfahren nach einem der Ansprüche 1 oder 2, **dadurch gekennzeichnet, dass** der erste Verfahrensschritt zur Umsetzung der Einsatzstoffe in der Konvektionszone des Dampfreformers durchgeführt wird.

4. Verfahren nach einem der Ansprüche 1 bis 3, **dadurch gekennzeichnet, dass** es sich bei dem ersten Verfahrensschritt um eine Pyrolyse handelt, die in einem Pyrolysereaktor durchgeführt wird.

5. Verfahren nach einem der Ansprüche 1 bis 3, **dadurch gekennzeichnet, dass** es sich bei dem ersten Verfahrensschritt um eine Partielle Oxidation (POX) handelt, die in einem POX-Reaktor durchgeführt wird, wozu dem POX- Reaktor ein geeignetes Oxidationsmittel zugeführt wird, bei dem es sich bevorzugt um Luft oder mit Sauerstoff angereicherte Luft oder Sauerstoff handelt.

6. Verfahren nach einem der Ansprüche 1 bis 5, **dadurch gekennzeichnet, dass** dem Zwischenprodukt aus dem ersten Verfahrensschritt vor dem Eintritt in den Dampfreformer Wasserdampf zugemischt wird.

7. Verfahren nach einem der Ansprüche 1 bis 6, **dadurch gekennzeichnet, dass** die Dampfreformierung unter Zuführung eines geeigneten Oxidationsmittels durchgeführt wird, wobei es sich bei dem Oxidationsmittel bevorzugt um Luft oder mit Sauerstoff angereicherte Luft oder Sauerstoff handelt.

8. Verfahren nach einem der Ansprüche 1 bis 7, **dadurch gekennzeichnet, dass** die Dampfreformierung in Anwesenheit eines Katalysators durchgeführt wird.

9. Verfahren nach einem der Ansprüche 1 bis 8, **dadurch gekennzeichnet, dass** die bei der katalytisch unterstützten Dampfreformierung eingesetzten Katalysatoren aus Nickel (Ni) oder Platin (Pt) oder Palladium (Pd) oder Eisen (Fe) oder Rhodium (Rh) oder Ruthenium (Ru) oder Iridium (Ir) bestehen oder Ni und/oder Pt und/oder Pd und/oder Fe und/oder Rh und/oder Ru und/oder Ir enthalten.

10. Verfahren nach einem der Ansprüche 1 bis 8, **dadurch gekennzeichnet, dass** bei der katalytisch unterstützten Dampfreformierung Katalysatoren eingesetzt werden, die auch zur katalytisch unterstützten Dampfreformierung von Naphtha oder von Methan geeignet sind.

11. Verfahren nach einem der Ansprüche 1 bis 10, **dadurch gekennzeichnet, dass** aus dem Synthesegas durch Wassergas-Shift-Reaktion ein Produktgas mit definiertem Wasserstoff/Kohlenmonoxid-Verhältnis erzeugt wird.

12. Verfahren nach Anspruch 11, **dadurch gekennzeichnet, dass** die Wassergas-Shift-Reaktion innerhalb des Dampfreformers durchgeführt wird.

13. Verfahren nach Anspruch 11, **dadurch gekennzeichnet, dass** die Wassergas-Shift-Reaktion in einem, dem Dampfreformers nachgeschalteten Wassergas-Shift-Reaktor (Shift-Reaktor) durchgeführt wird.

14. Verfahren nach einem der Ansprüche 1 bis 13, **dadurch gekennzeichnet, dass** die Einsatzstoffe Alkohole mit mehr als einer Alkoholgruppe, insbesondere Glycerin, enthalten.

15. Verfahren nach einem der Ansprüche 1 bis 14, **dadurch gekennzeichnet, dass** die Einsatzstoffe aus biogenen Rohstoffen gewonnen werden.

16. Vorrichtung zur Erzeugung zumindest eines Wasserstoff enthaltenden Produktstromes aus Einsatzstoffen, welche organische Sauerstoffverbindungen mit mehr als einem Kohlenstoffatom enthalten, **dadurch gekennzeichnet, dass** ein erster Reaktor, in dem aus einem Einsatzstoff ein Zwischenprodukt erzeugbar ist, und ein von außen beheizter Dampfreformierungsreaktor (Dampfreformer), in welchem das im ersten Reaktor erzeugte Zwischenprodukt in ein Wasserstoff und Kohlenmonoxid enthaltendes Synthesegas umsetzbar ist, hintereinander angeordnet sind.

17. Vorrichtung nach Anspruch 16, **dadurch gekennzeichnet, dass** der erste Reaktor in der Konvektionszone des Dampfreformers angeordnet ist.

18. Vorrichtung nach einem der Ansprüche 16 oder 17, **dadurch gekennzeichnet, dass** der erste Reaktor ein Reaktor zur Durchführung einer Pyrolyse (Pyrolysereaktor) ist.

19. Vorrichtung nach einem der Ansprüche 16 oder 17, **dadurch gekennzeichnet, dass** der erste Reaktor ein Reaktor zur Durchführung einer Partiellen Oxidation (POX-Reaktor) ist.

20. Vorrichtung nach einem der Ansprüche 16 bis 19, **dadurch gekennzeichnet, dass** der Dampfreformer Dampfreformierungsreaktor zur Durchführung einer katalytisch unterstützten Dampfreformierung ist.

21. Vorrichtung nach einem der Ansprüche 16 bis 20, **dadurch gekennzeichnet, dass** ein Reaktor zur Durchführung einer Wassergas-Shift-Reaktion (Shift-Reaktor), in welchem aus dem Wasserstoff und Kohlenmonoxid enthaltenden Synthesegas ein Produktgas mit definiertem Wasserstoff/Kohlenmonoxid-Verhältnis erzeugbar ist, hinter dem Dampfreformer oder innerhalb des Dampfreformers angeordnet ist.
